# EUROPÄISCHE PATENTSCHRIFT

(11) **EP 2 143 573 B1**
(45) Veröffentlichungstag und Bekanntmachung des Hinweises auf die Patenterteilung: **09.09.2015**
(21) Anmeldenummer: 08290668.6
(22) Anmeldetag: 08.07.2008
(51) Int. Cl.: B60H 1/03, H02J 7/14, B60H 1/00

(54) **Heizvorrichtung für ein Kraftfahrzeug**
Heater for a motor vehicle
Dispositif de chauffage pour véhicule automobile

(43) Veröffentlichungstag der Anmeldung: 13.01.2010
(73) Patentinhaber: MAHLE Behr GmbH & Co. KG, 70469 Stuttgart (DE); Mahle Behr France Rouffach S.A.S, 68250 Rouffach (FR); Behr-Hella Thermocontrol GmbH, 70469 Stuttgart (DE)
(72) Erfinder: Baruschke, Wilhelm, 73117 Wangen (DE); Brun, Michael, Dipl.-Ing, 78740 Rustenhart (FR); Gogmos, Erwan, Dipl.-Ing., 92800 Puteaux (FR); Kohl, Michael, Dipl.-Ing., 74321 Bietigheim (DE); Lochmahr, Karl, Dipl.-Ing., 71665 Vaihingen (DE); Finkeldei, Thomas, Dipl.-Ing., 59494 Soest (DE); Strauss, Thomas, Dipl.-Ing., 73274 Notzingen (DE)
(74) Vertreter: Grauel, Andreas

(56) Entgegenhaltungen:
- EP-A2- 0 827 853
- EP-A2- 1 122 104
- DE-A1- 4 238 364
- DE-A1- 10 231 517
- DE-C1- 4 433 836

## Beschreibung

Die vorliegende Erfindung betrifft eine Heizvorrichtung für ein Kraftfahrzeug nach dem Oberbegriff des Anspruchs 1 sowie ein Kraftfahrzeug mit einer erfindungsgemäßen Heizvorrichtung.

DE 102 31 517 A1 beschreibt eine Anordnung mit einem Generator, einem Längsregler und einem PTC-Zuheizer für ein Kraftfahrzeug, bei dem eine Verlustwärme des Längsreglers über einen Kühlmittelstrom abgeführt werden kann. Im Allgemeinen wird dabei Wärmemenge immer dann von dem Längsregler in das Kühlmittel eingetragen, wenn Verbraucher, die an eine ausgangsseitige Spannung des Längsreglers angeschlossen sind, in Betrieb sind und hierdurch einen entsprechenden Wärmeverlust des Längsreglers bewirken und nicht dann, wenn diese Wärmemenge von anderen Komponenten des Kraftfahrzeugs benötigt wird.

Es ist die Aufgabe der Erfindung, eine Heizvorrichtung für ein Kraftfahrzeug anzugeben, durch die ein besonders flexibles und effektives Wärmemanagement erzielt werden kann.

Diese Aufgabe wird für eine eingangs genannte Heizvorrichtung erfindungsgemäß mit den kennzeichnenden Merkmalen des Anspruchs 1 gelöst. Durch das Vorsehen eines Wärmespeichers kann eine von dem Regelglied abgegebene Wärmemenge über einen Zeitraum zwischengespeichert werden und dann von dem Wärmespeicher abgegeben werden, wenn die Wärmemenge aktuell von einer Komponente des Kraftfahrzeugs wie z. B. einem Heizkörper benötigt wird. Unter dem Regelglied ist dabei jede die Spannung des Generators zur Bereitstellung für Verbraucher regelnde Komponente zu verstehen, wobei durch eine solche Regelung grundsätzlich eine Verlustleistung bzw. Abwärme des Regelglieds bedingt ist. Vorteilhaft, aber nicht notwendig kann das Regelglied dabei als Längsregler ausgebildet sein. Längsregler sind einfach, kostengünstig und zuverlässig und erzeugen eine besonders glatte und störungsfreie Spannung, wobei sie eine mit der Leistungsentnahme der Verbraucher anwachsende thermische Verlustleistung aufweisen.

Erfindungsgemäß ist der Wärmespeicher als Latentspeicher ausgebildet, wobei ein Betriebsmittel des Latentspeichers die Wärmemenge zumindest teilweise unter Phasenumwandlung aus dem Kühlmittel aufnimmt oder an das Kühlmittel abgibt. Latentwärmespeicher nutzen im Allgemeinen die Enthalpie reversibler thermodynamischer Zustandsänderungen eines Betriebsmittels bzw. Speichermediums, z. B. des Phasenübergangs festflüssig. Betriebsmittel eines Latentspeichers können insbesondere Salze oder Paraffine sein. Derartige Betriebsmittel werden auch als "Phase Change Materials" (PCM) bezeichnet. Weiterhin gehören zum Prinzip der Latentwärmespeicherung Vorgänge, die z. B. auf Chemisorption beruhen, wobei im Zuge der Wärmespeicherung oder Wärmefreisetzung entsprechende Absorptions- und Desorptionsprozesse stattfinden. Allgemein ist es für eine Latentwärmespeicherung kennzeichnend, dass für eine gegebene Materialmenge eine relativ große Wärmemenge währen einer relativ kleinen Temperaturänderung gespeichert werden kann. Dies ermöglicht auf einfache Weise die Speicherung der Wärmemenge auch über einen längeren Zeitraum, wobei nur eine relativ kleine Masse an Speichermedium zur Speicherung einer großen Wärmemenge benötigt wird. Diese hohe auf die Masse bezogene Wärmekapazität ist insbesondere für den Einsatz in Kraftfahrzeugen vorteilhaft.

Bei einer alternativen Ausführungsform kann es aber auch vorgesehen sein, dass der Wärmespeicher als thermisch isoliertes Speichervolumen für das Kühlmittel ausgebildet ist. Auf einfache Weise kann dabei ein Vorratsbehälter während einer Wärmeabgabe des Regelglieds mit heißem Kühlmittel befüllt werden, wobei der Vorratsbehälter über entsprechende isolierende Maßnahmen, zum Beispiel nach dem Prinzip einer Thermoskanne, einen sehr geringen Wärmeaustausch mit der Umgebung zulässt. Das so in dem Vorratsbehälter gespeicherte heiße Kühlmittel kann dann später bei Bedarf dem Kühlmittelkreislauf wieder zugeführt werden.

In bevorzugter Detailgestaltung der Erfindung ist zusätzlich zu dem von dem Kühlmittel durchströmbaren Heizkörper ein elektrisches Heizglied zur unmittelbaren Erwärmung der Luft vorgesehen. Besonders zweckmäßig ist das elektrische Heizglied dabei als PTC-Heizelement ausgebildet (PTC = Positive Temperature Coeffiicient). Insbesondere vorteilhaft wird das Heizglied dabei mit einer nicht durch das Regelglied geregelten Spannung des Generators betrieben. Da die ungeregelte Spannung im Allgemeinen höher ist, kann eine besonders hohe Heizleistung des zusätzlichen Heizglieds erzielt werden. Im Fall der Auslegung als PTC-Heizelement erfolgt dabei eine einfache Selbstbegrenzung der Heizleistung, so dass die Gefahr einer zu hohen Heizleistung aufgrund einer zu hohen anliegenden Spannung nicht besteht. Allgemein hat ein solches zusätzliches Heizglied den Vorteil einer höheren Flexibilität und einer höheren erzielbaren Maximalfeistung bei der Aufheizung eines Fahrgastraums vor dem Hintergrund eines insgesamt optimierten Wärmemanagements des Kraftfahrzeugs.

In weiterer vorteilhafter Detailgestaltung sind eine elektrische Ansteuerung des zusätzlichen Heizglieds und das Regelglied als integrierte Komponente ausgebildet, wodurch Baukosten gespart werden.

In vorteilhafter Ausführungsform ist eine schaltbare Ventilanordnung vorgesehen, wobei ein von dem Regelglied abgehender Kühlmittelstrom durch die Ventilanordnung wahlweise zu dem Wärmespeicher oder zu dem Heizkörper geleitet werden kann. Hierdurch kann auf einfache Weise je nach Bedarfssituation und zur Verfügung stehender Wärmemenge im Kühlmittel ein Aufladen des Wärmespeichers oder ein vorrangiges Betreiben des Heizkörpers mit warmem Kühlmittel erfolgen. Die Ventilanordnung kann auch so ausgelegt sein, dass die Kühlmittelströme in einem vorgebbaren Verhältnis auf die verschiedenen Komponenten verteilt werden, z. B. durch getaktete Schaltung oder durch eine einstellbare Drossel. Bei einer vorteilhaften Weiterbildung kann durch die Ventilanordnung der von dem Regelglied abgehende Kühlmittelstrom wahlweise unmittelbar zu einem Verbrennungsmotor des Fahrzeugs geleitet werden. Eine solche Ventilschaltung ist insbesondere in Kaltstartphasen des Verbrennungsmotors vorteilhaft, die im Interesse eines Energieverbrauchs und einer Lebensdauer des Motors besonders kurz gehalten werden.

Bei einer zweckmäßigen Realisierung der Erfindung erfolgt eine Beladung des Wärmespeichers durch eine zeitabhängige Schaltung der Ventilanordnung. Alternativ oder ergänzend kann die Beladung aber auch durch eine temperaturabhängige Schaltung der Ventilanordnung erfolgen. Als maßgebende Temperatur kann dabei z. B. eine Temperaturdifferenz zwischen einem Eingang und einem Ausgang des Wärmespeichers dienen, wodurch ein Beladungszustand des Wärmespeichers entnehmbar ist. Ebenso kann eine absolute Temperatur ausgangsseitig des Wärmespeichers als Abschaltkriterium für eine Beladung des Wärmespeichers dienen. Bei geeigneter Auslegung der Steuerung des Wärmespeichers bzw. der Heizvorrichtung kann insbesondere auf zusätzliche Sensoren zur Bestimmung einer Kühlmitteltemperatur ausgangsseitig des Regelglieds verzichtet werden, wobei eine Abwärme des Regelglieds aus Informationen der entnommenen Leistung der elektrischen Verbraucher berechenbar ist und wobei Information über die Kühlmitteltemperatur ausgangsseitig des Verbrennungsmotors einer Steuerelektronik des Kraftfahrzeugs entnommen werden kann.

Besonders zweckmäßig ist es vorgesehen, dass das Kraftfahrzeug einen Hybridantrieb mit einem Verbrennungsmotor und einem Elektromotor aufweist. Bei einer solchen Antriebsart kommt es häufig zu Betriebszuständen, bei denen aufgrund des abgeschalteten Verbrennungsmotors zu wenig Abwärme des Antriebs zur Verfügung steht, so dass eine Beheizung des Fahrgastraums über die in dem Wärmespeicher enthaltene Energie besonders vorteilhaft ist, da andernfalls die hochwertige elektrische Energie z. B. einer Antriebsbatterie des Hybridfahrzeugs verwendet werden müsste.

Die Erfindung betrifft zudem ein Kraftfahrzeug mit einer erfindungsgemäßen Heizvorrichtung.

Weitere Vorteile und Merkmale der Erfindung ergeben sich aus den nachfolgend beschriebenen Ausführungsbeispielen sowie aus den abhängigen Ansprüchen.

Nachfolgend werden mehrere bevorzugte Ausführungsbeispiele der Erfindung beschrieben und anhand der anliegenden Zeichnungen näher erläutert.
- Fig.1: zeigt eine schematische Darstellung eines Kühlkreislaufs eines Kraftfahrzeugs mit einer erfindungsgemäßen Heizvorrichtung.
- Fig. 2: zeigt eine schematische Darstellung einer elektrischen Anlage des Kraftfahrzeugs gemäß dem Ausführungsbeispiel aus Fig. 1.
- Fig. 3: zeigt zwei Diagramme zur Veranschaulichung einer Steuerung der Beladung des Wärmespeichers aus der Ausführungsform nach Fig. 1.
- Fig.4: zeigt ein weiteres Ausführungsbeispiel einer erfindungsgemäßen Heizvorrichtung.

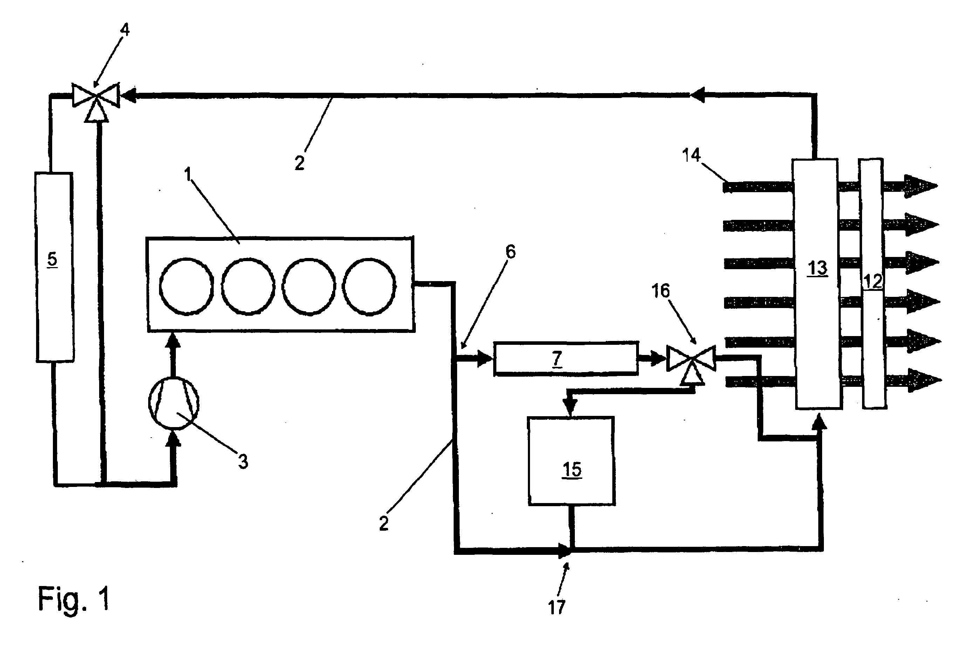

Gemäß dem in Fig. 1 dargestellten ersten bevorzugten Ausführungsbeispiel der Erfindung umfasst ein Kraftfahrzeug mit einer erfindungsgemäßen Heizvorrichtung einen Verbrennungsmotor 1, der von einem Kühlmittel eines Kühlkreislaufs 2 durchströmbar ist, welches von einer Kühlmittelpumpe 3 umgewälzt wird. Auf bekannte Weise kann die Strömung des Kühlmittels über ein Kühlmittelthermostat 4 bei Bedarf durch einen Hauptkühler 5 des Kraftfahrzeugs geleitet werden, um überschüssige Wärme nach außen abzuführen.

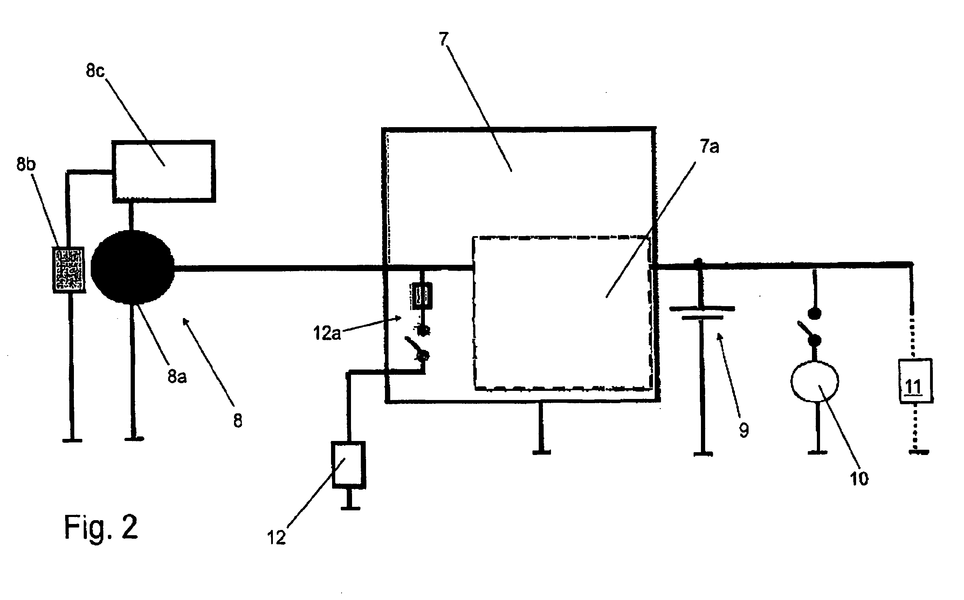

Über einen Abzweig 6 kann ein Teil des Kühlmittelstroms je nach Stellung einer Ventilanordnung 16 einen Längsregler 7 umströmen, der als elektrisches Regelglied eines Generators 8 (siehe Fig. 2) fungiert.

Der Generator 8 umfasst eine Lichtmaschine 8a, eine Erregerspule 8b und einen Spannungsregler 8c und kann je nach Drehzahl und abgefragter Leistung eine Spannung in einem Bereich zwischen z. B. 14 V und 42 V erzeugen.

Das als Längsregler ausgebildete elektrische Regelglied 7 hat eine Regeleinheit 7a, auf deren Ausgangsseite eine stabilisierte, geregelte Spannung im Bereich zwischen etwa 13 V und 15,5 V anliegt. Mittels dieser geregelten und stabilisierten Spannung wird eine Batterie 9 aufgeladen, ein Starter 10 des Verbrennungsmotors betrieben und weitere Verbraucher 11 versorgt.

Die zur Klimatisierung eines Fahrgastraums des Kraftfahrzeugs zugeführte Luft 14 ist über einen elektrischen PTC-Zuheizer 12 aufheizbar, der als zu einem kühlmitteldurchströmten Heizkörper 13 zusätzliches Heizglied ausgebildet ist. Der PTC-Zuheizer ist über einen hochspannungsseitig der Regeleinheit 7a vorgesehenen Schalter 12a wählbar aktivierbar. Der PTC-Zuheizer 12 wird daher mit der ungeregelten, hohen Ausgangsspannung des Generators 8 betrieben, so dass seine Heizleistung besonders groß ausgelegt werden kann und durch seinen Betrieb keine zusätzliche Verlustleistung an der Regeleinheit 7a des Längsreglers 7 abfällt.

Wie in der Zeichnungen Fig. 2 schematisch dargestellt ist, sind der ansteuerbare Schalter 12a des PTC-Zuheizers 12 und das Regelglied 7 als integrierte bauliche Einheit ausgebildet.

Die über die Verbraucher 9, 10, 11 bei stabilisierter Spannung von im Mittel etwa 14 V entnommene Leistung bedingt eine erhebliche thermische Verlustleistung an der Regeleinheit 7a, die umso größer ausfällt, je stärker die vom Generator 8 erzeugte Ausgangsspannung heruntergeregelt wird. Bei modernen Kraftfahrzeugen mit vielen Verbrauchern kann die thermische Verlustleistung des Längsreglers 7 im Bereich mehrerer Kilowatt, z. B. 3 kW, liegen. Aufgrund der in modernen Kraftfahrzeugen großen Vielzahl der Verbraucher 9, 10, 11 und der aus Kosten- und Gewichtsgründen limitierten Größe des elektrischen Generators 8 sollte dabei der PTC-Zuheizer eine gewisse Leistung, z. B. im Bereich von 2 kW, nicht überschreiten. Daher ist es besonders vorteilhaft, das Regelglied 7 thermisch an den Kühlmittelkreislauf 2 anzukoppeln und die Abwärme des Regelglieds 7 über das Kühlmittel abzuführen, um das Regelglied 7 vor einer Überhitzung zu schützen und zugleich die Abwärme sinnvoll insbesondere zur Beheizung eines Fahrgastraums des Kraftfahrzeugs zu nutzen. Hierzu kann das aufgeheizte, von dem Längsregler 7 abgehende Kühlmittel durch den Heizkörper 13 einer Belüftungsanlage des Kraftfahrzeugs geführt werden. Gemäß Fig. 2 ist der Heizkörper 13 bezüglich der Strömungsrichtung der konditionierten Zuluft 14 zur Fahrzeugkabine vor dem elektrischen PTC-Zuheizer 12 angeordnet.

Da eine hohe Abwärmeleistung des Längsreglers zeitlich nicht immer mit einem hohen Heizbedarf für die Zuluft der Fahrzeugkabine einhergeht, ist erfindungsgemäß ein dem Längsregler 7 nachgeordneter Wärmespeicher 15 vorgesehen. Über die insbesondere als 3-Wege-Ventil 16 ausgebildete Ventilanordnung kann der Heizkörper 13 unmittelbar mit dem aus dem Längsregler 7 austretenden, aufgeheizten Kühlmittel beströmt werden. Alternativ oder je nach Ventilstellung auch ergänzend im Sinne einer Aufteilung des Kühlmittelstroms kann der Wärmespeicher 15 beströmt werden. Austrittsseitig des Wärmespeichers 15 wird der Kühlmitelstrom über einen Abzweig 17 wieder dem Heizkörper 13 zugeführt. Der wählbar durch den Wärmespeicher 15 geführte Kühlmittelstrom kann je nach Ausgangslage den Wärmespeicher energetisch mit Wärmeenergie beladen oder durch aus dem Wärmespeicher 15 freigesetzte Wärmeenergie aufgeheizt werden.

Im vorliegenden Ausführungsbeispiel ist der Wärmespeicher 15 dabei als Latentwärmespeicher ausgebildet, in dem ein Betriebsmittel enthalten ist, das unter Aufnahme oder Abgabe von Wärme eine Phasenumwandlung erfährt. Bei dem Betriebsmittel kann es sich um ein Salz oder auch um ein Paraffin handeln. Derartige Betriebsmittel sind als "Phase Change Materials" (PCM) bekannt. Gegebenenfalls kann es vorgesehen sein, dass einer der Phasenübergänge, insbesondere der wärmefreisetzende Phasenübergang, durch gezielten Einsatz von Kristallisationskeimen ausgelöst wird. Es ist eine Vielzahl von PCM bekannt, die jeweils einen idealen Temperaturbereich im Bereich ihrer Phasenumwandlungstemperatur haben. Im vorliegend interessierenden Bereich einer Aufheizung von Kühlmittel zur Beheizung eines Fahrgastraums liegen die Phasenübergangstemperaturen typisch zwischen 50 °C und 90 °C. In diesem Bereich steht eine Vielzahl geeigneter Betriebsmittel zur Verfügung, zum Beispiel Natriumacetat CH₃COONa-3H₂O, NaOH-H₂O, Mg(NO₃)₂-6H₂O, Öle, Paraffine etc..

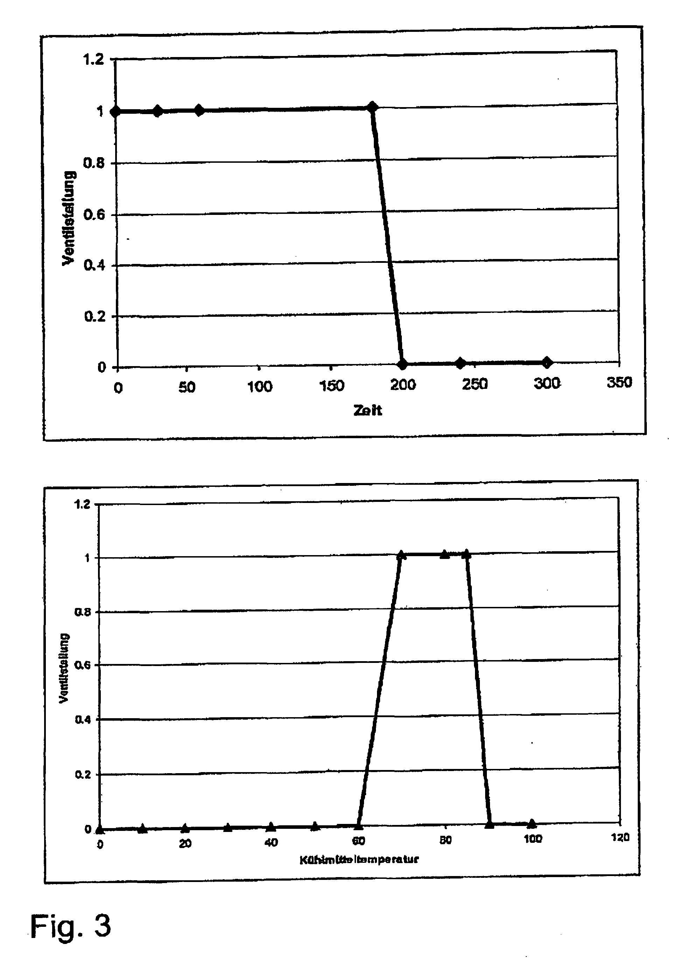

Wie Fig. 3 schematisch veranschaulicht, kann eine Beladung des Wärmespeichers über eine Zeitsteuerung oder auch eine Temperatursteuerung erfolgen. Unter der dargestellten Ventilstellung 1 ist dabei jeweils die Durchströmung des Wärmespeichers 15 mit heißem Kühlmittel zum Zweck seiner energetischen Aufladung zu verstehen. Der thermische Zustand des Kühlmittels kann z. B. sensorisch ermittelt werden oder auch indirekt über die Information der an dem Längsregler 7 abgefragten elektrischen Leistung und der daraus resultierenden thermischen Verlustleistung.

In dem oberen Diagramm aus Fig. 3 ist dargestellt, dass die Stellung der Ventilanordnung 16 den Kühlmittelstrom über einen von der Steuerrung vorgegebenen Zeitraum, vorliegend etwa 200 Sekunden, durch den Wärmespeicher 15 leitet um diesen energetisch aufzuladen. Dabei kann über weitere Informationen sichergestellt werden, dass das Kühlmittel eine ausreichende Temperatur zur Beladung des Wärmespeichers hat.

Gemäß dem unteren Diagramm aus Fig. 3, das eine Ventilstellung der Ventilanordnung 16 in Abhängigkeit von der Kühlmitteltemperatur ausgangsseitig des Regelglieds 7 zeigt, wird der Wärmespeicher aufgeladen, wenn die Kühlmitteltemperatur sich in einem Bereich zwischen etwa 60° und etwa 90° befindet. Dabei können weitere Kriterien für ein Beladen des Wärmespeichers 15 in die Ventilsteuerung einbezogen werden, wie etwa die Information, dass die Wärme des Kühlmittels gegenwärtig nicht unmittelbar zur Beheizung des Fahrzeuginnenraums benötigt wird.

Besonders zweckmäßig kann eine erfindungsgemäße Heizvorrichtung und die daraus resultierende hohe Flexibilität des Wärmemanagements bei einem Hybridfahrzeug eingesetzt werden. Bei solchen Fahrzeugen mit einem kombinierten Antrieb aus Verbrennungsmotor und Elektromotor treten häufig Fahrsituationen auf, in denen der Verbrennungsmotor abgeschaltet ist. Dieses kann beispielsweise mit einem Starter-Generator o.ä. ausgestattet sein, um den Verbrennungsmotor in Stopp-Phasen auszuschalten und um ihn anschließend je nach Betriebszustand wieder schnell einschalten zu können. Besteht eine solche Abschaltung über einen längeren Zeitraum bei niedrigen Außentemperaturen, so ist in besonderem Maße die Möglichkeit einer Beheizung des Fahrzeuginnenraums durch eine gespeicherte Wärmemenge des Wärmespeichers 15 gewünscht, da sonst hochwertige elektrische Energie aus einer Fahrbatterie zu Heizzwecken verwendet werden müsste. In einer Gesamtbetrachtung des Energiehaushalts eines solchen Kraftfahrzeugs wird durch den Wärmespeicher 15 erreicht, dass die über einen typischen Betriebszyklus des Fahrzeugs integrierte Wärmeabgabe nach außen weiter verringert wird. Somit wird insgesamt der Energieverbrauch des Fahrzeugs gesenkt.

Weitere Vorteile bestehen in einer Überbrückung von Motor-Aus-Phasen, in einer Überbrückung von Phasen geringer Motordrehzahl, in denen die elektrische Leistung des Generators 8 keinen oder nur unzureichenden Betrieb des Zuheizers 12 erlaubt, eine Kraftstoffeinsparung durch Motor-Aus-Phasen bzw. durch geringere Generatorbelastung des Motors, eine schnellere Aufheizung der Fahrzeugkabine, höhere Luftaustrittstemperaturen aus den Luftdüsen, ein Klimakomfortgewinn etc.

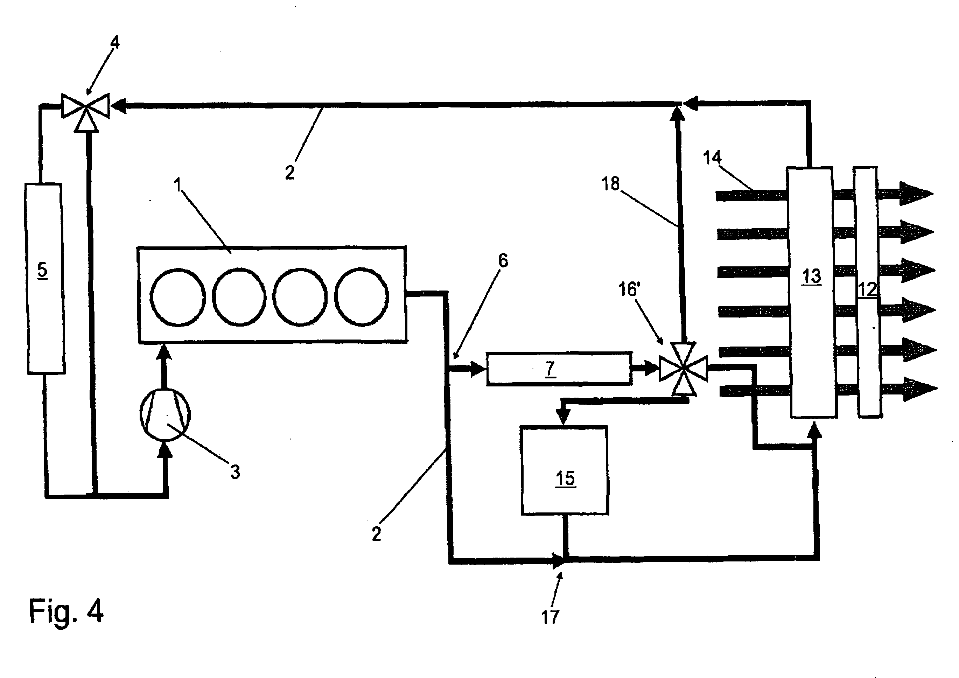

Eine zweite, gegenüber Fig. 1 abgewandelte Ausführungsform der Erfindung ist in Fig. 4 dargestellt. Dabei besteht die Ventilanordnung 16' im Unterschied zur ersten Ausführungsform nicht aus einem Drei-Wege-Ventil, sondern aus einem Vier-Wege-Ventil, wobei ein weiterer wählbarer Abzweig 18 der Ventilanordnung 16' den aus dem Längsregler 7 austretenden Kühlmittelstrom unmittelbar unter Umgehung von Wärmespeicher 15 und Heizkörper 13 zum Verbrennungsmotor 1 zurückführt. Die Aktivierung dieses Zweigs 18 ist besonders zweckmäßig, um eine schnelle Aufheizung des Verbrennungsmotors 1 in einer Kaltstartphase zu erzielen. Wird hierbei zudem eine Aufheizung der Fahrzeugkabine benötigt, so wird regelmäßig der elektrische Zuheizer 12 auf maximaler Leistung betrieben, was durch die mechanische Belastung des Generators 8 die Kaltstartphase des Verbrennungsmotors 1 weiter verkürzt.

## Patentansprüche

1. Heizvorrichtung für ein Kraftfahrzeug, umfassend
einen elektrischen Generator (8) mit einem Regelglied (7) zur Regelung einer von dem Generator (8) erzeugten Spannung,
einen Kühlkreislauf (2), wobei eine Abwärme des Regelglieds (7) durch ein Kühlmittel des Kühlkreislaufs (2) abführbar ist, und
einen von dem Kühlmittel durchströmbaren Heizkörper (13) zur Erwärmung von insbesondere einem Passagierbereich zuführbarer Luft (14),
**dadurch gekennzeichnet dass** ein Wärmespeicher (15) vorgesehen ist, wobei eine von dem Regelglied (7) durch das Kühlmittel abgeführte Wärmemenge in dem Wärmespeicher (15) speicherbar ist und die gespeicherte Wärmemenge wählbar freisetzbar ist, wobei der Wärmespeicher (15) als Latentspeicher ausgebildet ist, wobei ein Betriebsmittel des Latentspeichers (15) die Wärmemenge zumindest teilweise unter Phasenumwandlung aus dem Kühlmittel aufnimmt oder an das Kühlmittel abgibt, und der Wärmespeicher (15) als thermisch isoliertes Speichervolumen für das Kühlmittel ausgebildet ist.

2. Heizvorrichtung nach Anspruch 1, **dadurch gekennzeichnet, dass** zusätzlich zu dem Heizkörper (13) ein elektrisches Heizglied (12) zur Erwärmung der Luft (14) vorgesehen ist.

3. Heizvorrichtung nach Anspruch 2, **dadurch gekennzeichnet, dass** das elektrische Heizglied (12) als PTC-Heizelement ausgebildet ist.

4. Heizvorrichtung nach Anspruch 2 oder 3, **dadurch gekennzeichnet, dass** das Heizglied (12) mit einer nicht durch das Regelglied (7) geregelten Spannung des Generators (8) betrieben wird.

5. Heizvorrichtung nach einem der Ansprüche 2 bis 4, **dadurch gekennzeichnet, dass** eine elektrische Ansteuerung (12a) des Heizglieds (12) und das Regelglied (7) als integrierte Komponente ausgebildet sind.

6. Heizvorrichtung nach einem der vorhergehenden Ansprüche, **dadurch gekennzeichnet, dass** eine schaltbare Ventilanordnung (16, 16') vorgesehen ist, wobei ein von dem Regelglied (7) abgehender Kühlmittelstrom durch die Ventilanordnung (16, 16') wahlweise zu dem Wärmespeicher (15) oder zu dem Heizkörper (13) geleitet werden kann.

7. Heizvorrichtung nach Anspruch 6, **dadurch gekennzeichnet, dass** der Kühlmittelstrom zudem wahlweise unmittelbar zu einem Verbrennungsmotor (1) des Fahrzeugs geleitet werden kann.

8. Heizvorrichtung nach einem der Ansprüche 6 oder 7, **dadurch gekennzeichnet, dass** eine Beladung des Wärmespeichers (15) durch eine zeitabhängige Schaltung der Ventilanordnung (16, 16') erfolgt.

9. Heizvorrichtung nach einem der Ansprüche 5 bis 8, **dadurch gekennzeichnet, dass** eine Beladung des Wärmespeichers (15) durch eine temperaturabhängige Schaltung der Ventilanordnung (16, 16') erfolgt.

10. Kraftfahrzeug, umfassend eine Heizvorrichtung nach einem der vorhergehenden Ansprüche.

11. Kraftfahrzeug nach Anspruch 10, **dadurch gekennzeichnet, dass** das Kraftfahrzeug einen Hybridantrieb mit einem Verbrennungsmotor (1) und einem Electromotor aufweist.

## Claims

1. A heating device for a motor vehicle, comprising
an electric generator (8), which has a regulating element (7) for regulating a voltage generated by the generator (8),
a coolant circuit (2), wherein heat dissipated by the regulating element (7) can be carried off by a coolant of the cooling circuit (2), and
a heater core (13), through which the coolant flows, for heating air (14) that can be fed to a passenger compartment, in particular, **characterized in that**
a heat store (15) is provided, wherein a quantity of heat that is carried away from the regulating element (7) by the coolant can be stored in the heat store (15) and the stored quantity of heat can be selectively released, wherein the heat store (15) is designed as a latent store, wherein an operating means of the latent store (15) receives the heat quantity from the coolant or transfers the heat quantity to the coolant, with an at least partial phase conversion, and the heat store (15) is designed as a thermally insulated storage volume for the coolant.

2. The heating device according to claim 1, **characterized in that** an electric heating element (12) for heating the air (14) is provided in addition to the heater core (13).

3. The heating device according to claim 2, **characterized in that** the electric heating element (12) is designed as a PTC heating element.

4. The heating device according to claim 2 or 3, **characterized in that** the heating element (12) is operated with a voltage of the generator (8) that is not regulated by the regulating element (7).

5. The heating device according to any one of claims 2 to 4, **characterized in that** an electric controller (12a) of the heating element (12) and the regulating element (7) are designed as an integrated component.

6. The heating device according to any one of the preceding claims, **characterized in that** a switchable valve arrangement (16, 16') is provided, wherein a coolant flow proceeding from the regulating element (7) can be selectively directed by the valve arrangement (16, 16') to either the heat store (15) or to the heater core (13).

7. The heating device according to claim 6, **characterized in that** the coolant flow can also be selectively directed directly to an internal combustion engine (1) of the vehicle.

8. The heating device according to any one of claims 6 or 7, **characterized in that** the heat store (15) is loaded by a time-dependent switching of the valve arrangement (16, 16').

9. The heating device according to any one of claims 5 to 8, **characterized in that** the heat store (15) is loaded by a temperature-dependent switching of the valve arrangement (16, 16').

10. A motor vehicle comprising a heating device according to any one of the preceding claims.

11. The motor vehicle according to claim 10, **characterized in that** the motor vehicle comprises a hybrid drive having an internal combustion engine (1) and an electric motor.

## Revendications

1. Dispositif de chauffage pour un véhicule automobile, comprenant
une génératrice électrique (8) comprenant un organe de régulation (7) servant à la régulation d'une tension produite par la génératrice (8),
un circuit de refroidissement (2), où une chaleur dissipée de l'organe de régulation (7) peut être évacuée par un liquide de refroidissement du circuit de refroidissement (2), et
un radiateur (13) pouvant être traversé par le liquide de refroidissement et servant au chauffage en particulier de l'air (14) pouvant être fourni à une zone passagers,
**caractérisé en ce qu'**il est prévu un accumulateur de chaleur (15), où une quantité de chaleur provenant de l'organe de régulation (7) et évacuée par le liquide de refroidissement peut être accumulée dans l'accumulateur de chaleur (15), et la quantité de chaleur accumulée peut être dégagée de manière choisie, où l'accumulateur de chaleur (15) est conçu comme un régulateur à changement d'état, où un moyen de fonctionnement du régulateur à changement d'état (15) absorbe au moins partiellement, par transition de phase, la quantité de chaleur provenant du liquide de refroidissement ou bien fournit au liquide de refroidissement ladite quantité de chaleur, et l'accumulateur de chaleur (15) est conçu comme un volume d'accumulateur isolé thermiquement pour le liquide de refroidissement.

2. Dispositif de chauffage selon la revendication 1, **caractérisé en ce qu'**il est prévu, en plus du radiateur (13), un organe de chauffage électrique (12) servant au chauffage de l'air (14).

3. Dispositif de chauffage selon la revendication 2, **caractérisé en ce que** l'organe de chauffage électrique (12) est conçu comme un élément chauffant à coefficient de température positif (CTP).

4. Dispositif de chauffage selon la revendication 2 ou 3, **caractérisé en ce que** l'organe de chauffage (12) est actionné par une tension de la génératrice (8), non réglée par l'organe de régulation (7).

5. Dispositif de chauffage selon l'une quelconque des revendications 2 à 4, **caractérisé en ce qu'**une commande électrique (12a) de l'organe de chauffage (12) et l'organe de régulation (7) sont conçus comme des composants intégrés.

6. Dispositif de chauffage selon l'une quelconque des revendications précédentes, **caractérisé en ce qu'**il est prévu un agencement de soupapes commutable (16, 16'), où un flux de liquide de refroidissement partant de l'organe de régulation (7) peut être dirigé de façon sélective jusqu'à l'accumulateur de chaleur (15) ou jusqu'au radiateur (13), par l'agencement de soupapes (16, 16').

7. Dispositif de chauffage selon la revendication 6, **caractérisé en ce que** le flux de liquide de refroidissement peut être dirigé en outre, de façon sélective, directement jusqu'à un moteur à combustion interne (1) du véhicule.

8. Dispositif de chauffage selon l'une des revendications 6 ou 7, **caractérisé en ce qu'**une charge de l'accumulateur de chaleur (15) est produite par un circuit de l'agencement de soupapes (16, 16') se déclenchant en fonction du temps.

9. Dispositif de chauffage selon l'une quelconque des revendications 5 à 8, **caractérisé en ce qu'**une charge de l'accumulateur de chaleur (15) est produite par un circuit de l'agencement de soupapes (16, 16') se déclenchant en fonction de la température.

10. Véhicule automobile comprenant un dispositif de chauffage selon l'une quelconque des revendications précédentes.

11. Véhicule automobile selon la revendication 10, **caractérisé en ce que** le véhicule automobile présente un entraînement hybride avec un moteur à combustion interne (1) et avec un moteur électrique.
